(19) Europäisches Patentamt
European Patent Office
Office européen des brevets

(11) Publication number: **0 252 171**
**A1**

(12) **EUROPEAN PATENT APPLICATION**

(21) Application number: **86109250.0**

(51) Int. Cl.[4]: **G06F 15/74** , G09G 1/00

(22) Date of filing: **05.07.86**

(43) Date of publication of application:
**13.01.88 Bulletin 88/02**

(84) Designated Contracting States:
**CH DE FR GB LI**

(71) Applicant: **MITSUBISHI DENKI KABUSHIKI KAISHA**
**2-3, Marunouchi 2-chome Chiyoda-ku**
**Tokyo 100(JP)**

(72) Inventor: **Maehara, Fumihiko**
**1-2, Wadasakicho 1-chome Hyogo-ku**
**Kobe-shi, Hyogo(JP)**

(74) Representative: **Eisenführ & Speiser**
**Martinistrasse 24**
**D-2800 Bremen 1(DE)**

(54) **Power plant monitor control system.**

(57) A power plant monitor control system having a multi-window function in bit-map display system, capable of displaying multi-functional screens on a single display screen, and operative to select a plurality of necessary functional screens by operating a pseudo keyboard in the menu window by means of a mouse device.

FIG.2B

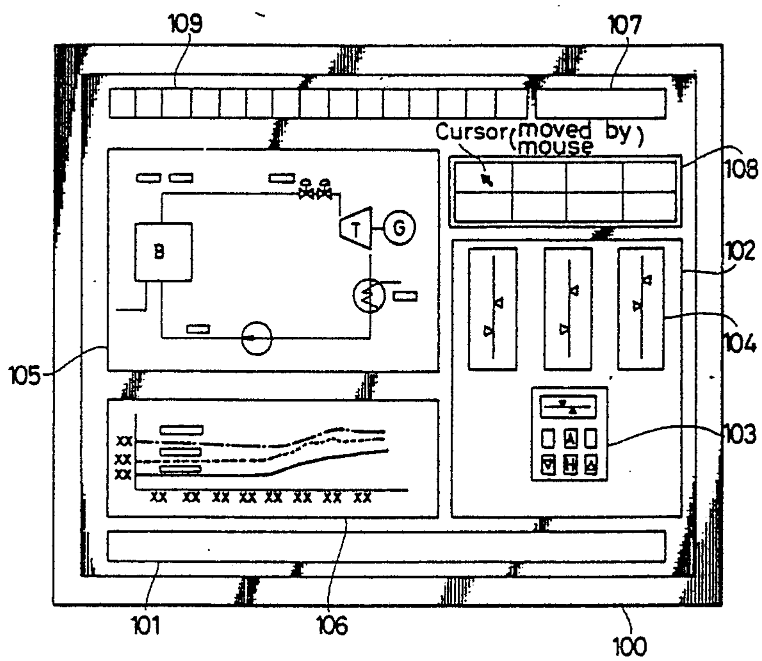


EP 0 252 171 A1

Xerox Copy Centre

# POWER PLANT MONITOR CONTROL SYSTEM

## BACKGROUND OF THE INVENTION

### Field of the Invention

The present invention relates to a power plant monitor control system and, particularly to a monitor control system having a multi-window function of the type of bit-map display system for displaying multiple functional fields selectively on a single display screen.

### Description of the Prior Art

There has been known this kind of system as shown in Figs. 1A and 1B. Fig. 1A shows the front view of the monitor control system, and Fig. 1B shows the side view of the system. The system includes a fault indicator panel 1, an instrument panel 2, a recorder panel 3, an operation panel 4 including various switches such as an AUTO/MANUAL selector switch, a CRT unit 5 for displaying system diagrams and fault messages, a clock 6, and an industrial TV set 7 for the observation of boiler combustion, water intake, and boiler safety valve periphery.

Next, the operation of the above system will be described. The operator's job for starting up or halting the power plant, or monitoring abnormalities of the power plant is as follows. Initially, the operator stands in front of the operation monitoring facility to check the process data on the instrument panel 2, recorder panel 3 and CRT unit 5. Then, the operator issues control commands on the operation panel 4 basing on the checked data to the operating actuators so that the process values are maintained within the specified range. In the event of abnormality, the operator knows it on the fault indicator panel 1, reads the CRT unit 5 to know the details of the fault, and commences the recovery operation on the operation panel 4. The clock 6 is used to notify the operator of the time of day in hour, minutes and seconds, and it operates in unison with a master clock such as a computer. The industrial TV set 7 is remote-controlled from the central control room where the monitoring facility is installed, and it allows the operator to view desired portions of the plant.

The conventional monitor control system has been arranged as described above, and the plant operator has been required to implement the monitoring operations while moving back and forth, right and left in front of the operation panel which extends almost 10 meters in width. The operator must be fully skilled for the operation of the power plant which has been a hard work, and therefore more than one operator has been needed.

## SUMMARY OF THE INVENTION

A main object of the present invention is to provide a power plant monitor control system which overcomes the foregoing prior art deficiency.

Another object of the present invention is to provide a power plant monitor control system which provides an optimal operational environment for the plant operator.

Still another object of the present invention is to provide a power plant monitor control system which displays multiple functional fields on a single display screen.

Other objects and advantages of the present invention will become apparent from the following detailed description taken in conjunction with the accompanying drawings.

## BRIEF DESCRIPTION OF THE DRAWINGS

Fig. 1 is a set of front and side views of the conventional power plant monitor control system;

Figs. 2A and 2B are a side view of the power plant monitor control system and a plan view of its monitor screen, respectively, embodying the present invention;

Fig. 3 is a plan view of the monitor screen according to another embodiment of this invention;

Fig. 4 is a flowchart explaining the operating procedure of the arrangement of Figs. 2A and 2B; and

Fig. 5 is a flowchart showing the operating procedure according to another embodiment of this invention.

## DETAILED DESCRIPTION OF THE PREFERRED EMBODIMENTS

Embodiments of the present invention will be described with reference to the drawings. Fig. 2A shows the inventive monitor control system, which includes a monitor screen 100. Fig. 2B shows the details of the monitor screen 100, which includes a fault display window 101, an operating station window 102, an operational station 103 for the operational actuators indicated by the operating station window 102, an instrument set 104 related to the operating station 103, a system display window 105 related to the operating station 103, and a trend display window 106 related to the operating station 103. A clock 107 operates in unison with a master clock for progressing at every second, and it includes a calendar function. The screen 100 further includes a menu window 108 for selecting an operating station window, and a menu window 109 for selecting a system display window. The windows 102, 106 and 108 vary their displays in relation with each other. Fig. 3 shows another embodiment for the monitoring display screen 100 shown in Fig. 2A.

Next, the operation of the inventive power plant monitor control system will be described. Fig. 4 shows in flowchart the operational procedure of the inventive power plant monitor control system. Initially, when the monitor screen 100 is opened in step ST1, the operator selects a desired system to be displayed in the menu window 109 for selecting system display windows, and then selects an operating station in the menu window 108 for selecting operating stations. These window selecting operations can be done promptly by moving the cursor to a desired menu window using a CPU-linked "mouse" device. The selecting operations proceed sequentially in this way until the monitor screen is closed at step STn. The operator carries out a series of operations in interactive mode with the monitor screen, and therefore the operator does not need to walk about the operation panel.

Although in the above embodiment the analog control loop has been described, the subsidiary operational logics are implemented in the same principle with a display of the operating keys in place of the operating station window, and a display of a logic window in place of the trend display window. This selecting operation can be initiated from the operating station selection menu by the mouse operation.

Although the above embodiment is of the monitoring control for the boilers and turbines in the power plant, the control object may be a hydroelectric power plant or a nuclear power plant, with the same effectiveness as of the above embodiment.

Fig. 5 shows in flowchart the operational procedure of another embodiment of this invention. The same portions as those in Fig. 4 will not be described in the following description. In this embodiment, the occurrence of a fault causes the alert logics to specify the system display window 105 automatically, and the pertinent operating station window 102 and trend display window 106 are selected automatically. In the flowchart of Fig. 5, when the monitor screen is opened at step ST1, a series of operations take place in accordance with the procedure shown until the monitor screen is closed at step STn.

According to the present invention, as described above, only necessary monitor screen is selectively displayed using a mouse device without changing the functions of the conventional large-scale operation monitor system (BTG panel), whereby the operationability and accuracy of the monitoring operations can be improved significantly.

Moreover, the selective display in touch panel system on the screen for all plant systems and operating stations allows reduction in the size and cost of the operation monitoring system.

## Claims

1. A power plant monitor control system comprising a monitor screen having a multi-window function in bit-map display system; and various menu windows which allows arbitrary selection of operating parameters of a power plant on said monitor screen, selecting operation for various window functions on said monitor screen being implemented by means of a mouse device linked to a CPU of said monitor control system.

2. A power plant monitoring system comprising a monitor screen having a multi-window function in bit-map display system; menu windows which allow arbitrary selection of operating parameters of a power plant on said monitor screen; and an alert system which operates at occurrence of a fault of a portion in said power plant which can be selected by said menu window function, an operation of said alert system being followed by automatic selection and display of a monitor control screen optimal to a display item of said alert system upon occurrence of a fault.

3. A power plant monitor control system comprising a monitor screen having a multi-window function in bit-map display system; and various menu windows which allow arbitrary selection of operating parameters of a power plant on said monitor screen, selecting operation for selecting various window functions on said monitor screen being arranged in touch panel system.

FIG.1A

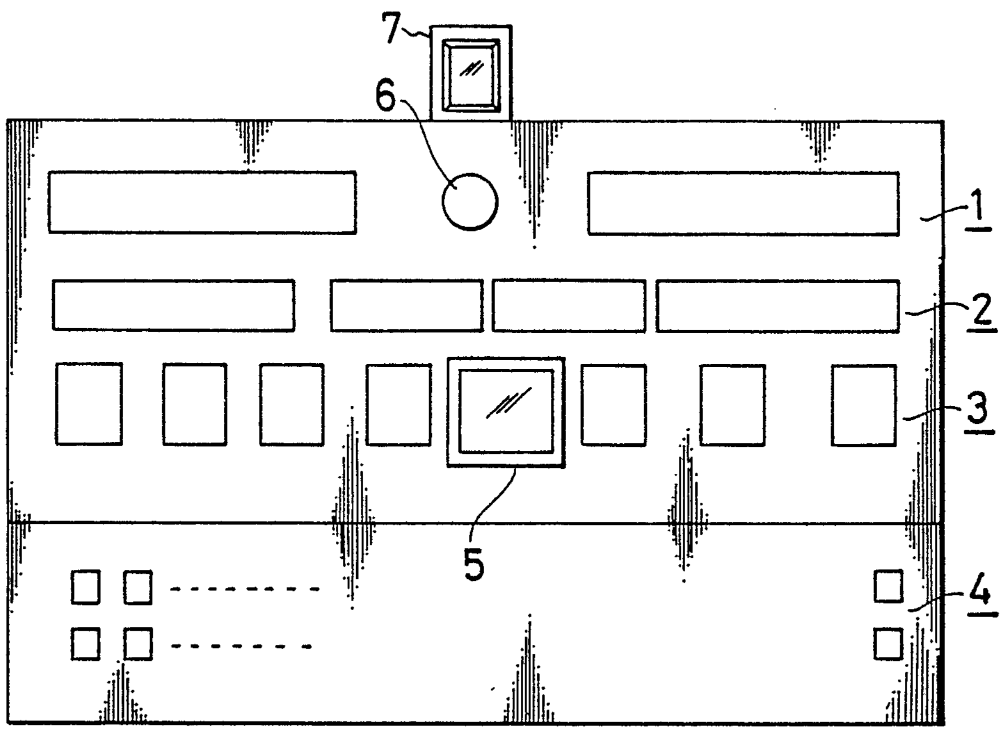


FIG.1B

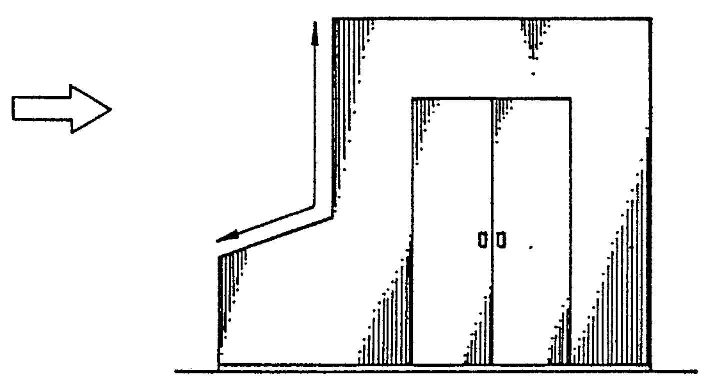

FIG. 2B

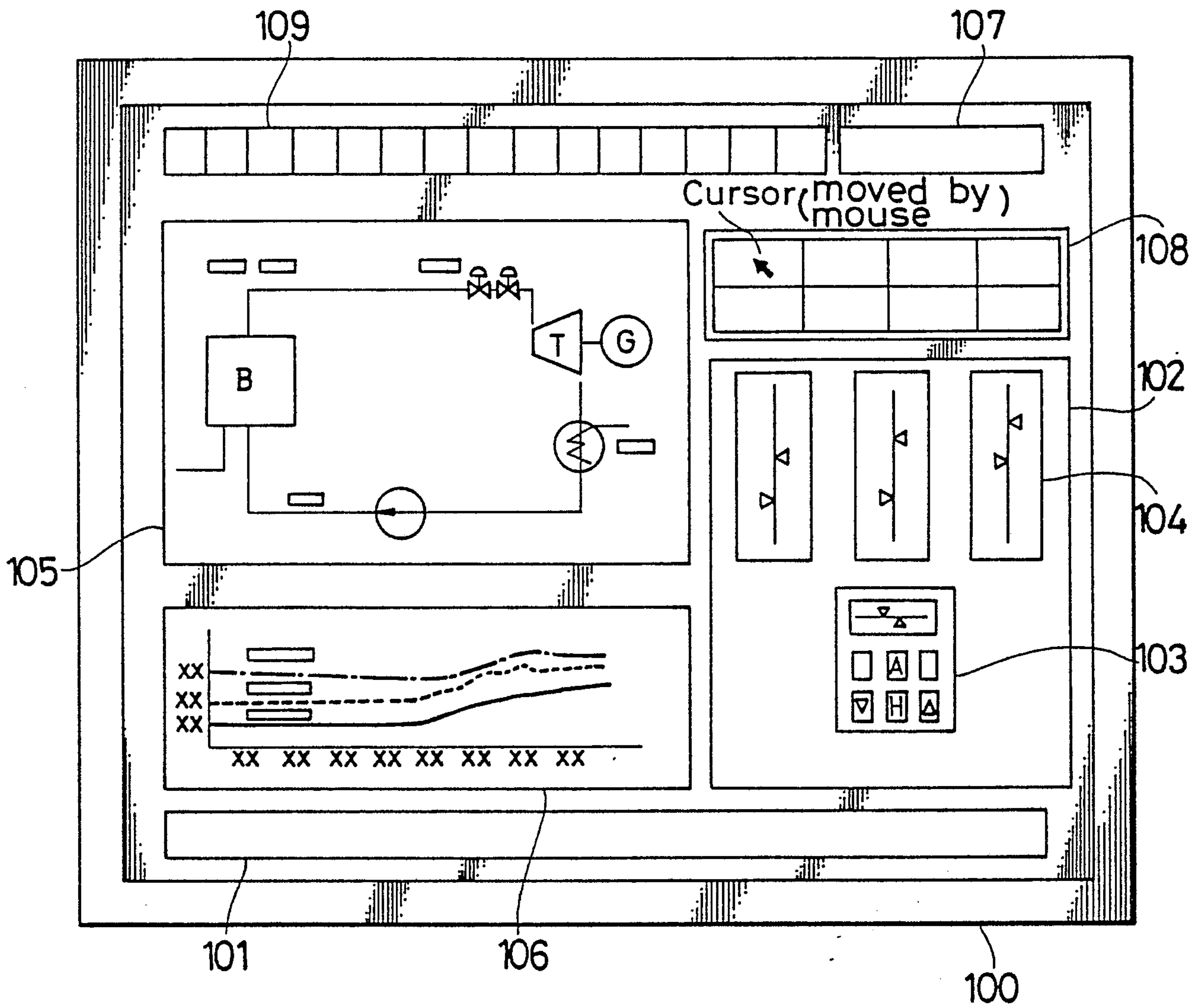
109
107
Cursor (moved by mouse)
108
B
T
G
102
104
105
103
A
H
XX
XX
XX
XX XX XX XX XX XX XX XX
101
106
100

FIG. 2A

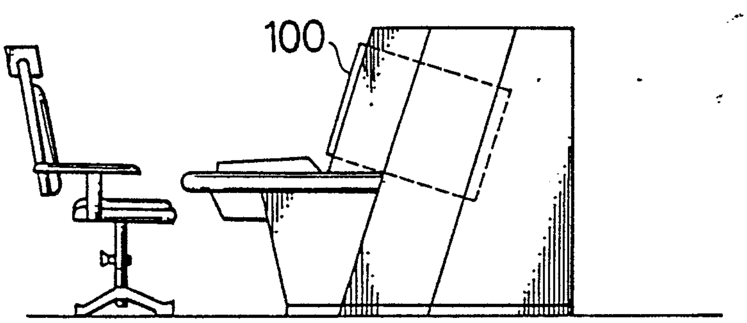
100

FIG.3

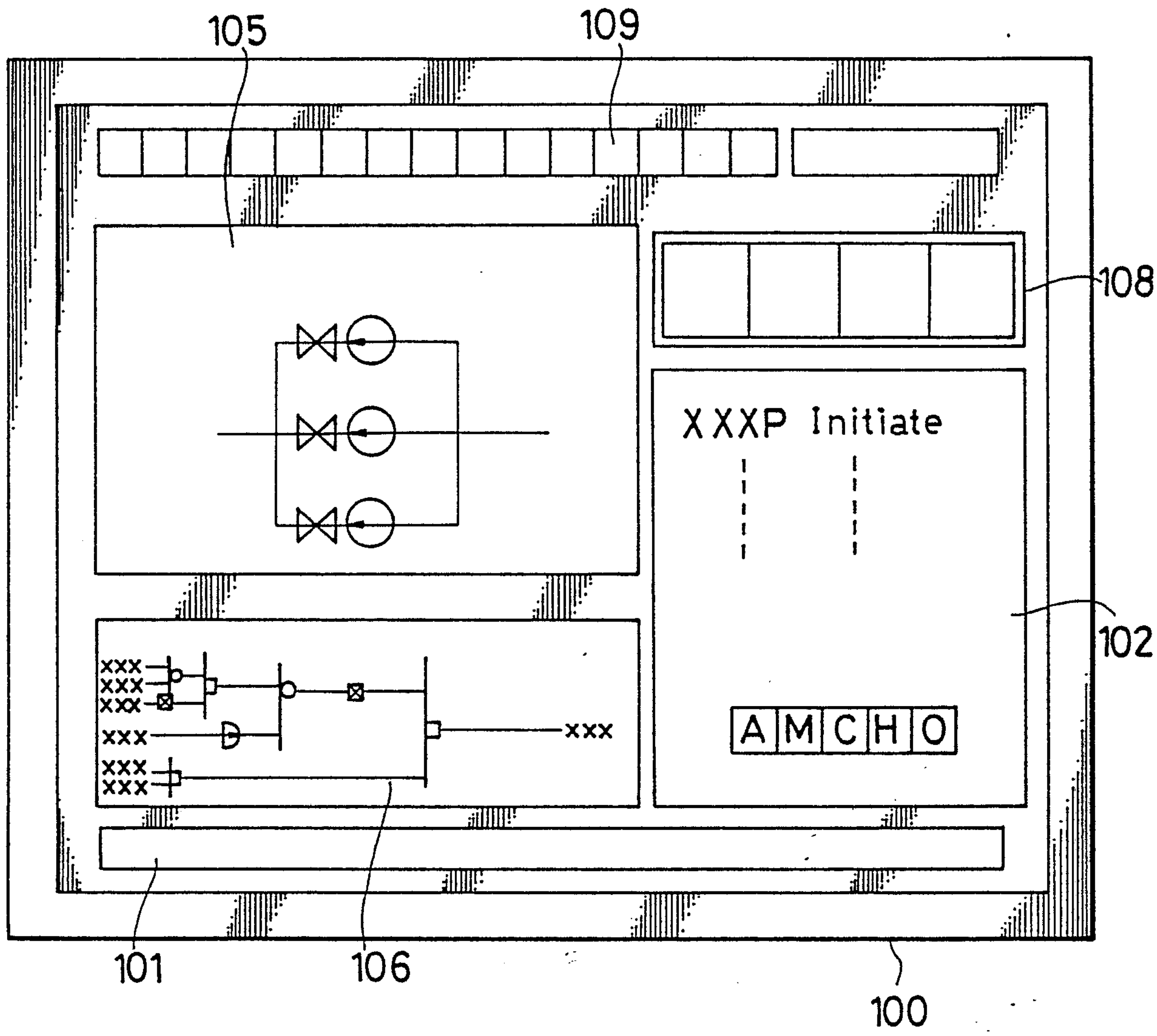
105
109
108
XXXP Initiate
102
A M C H O
xxx
xxx
xxx
xxx
xxx
xxx
xxx
101
106
100

FIG.4

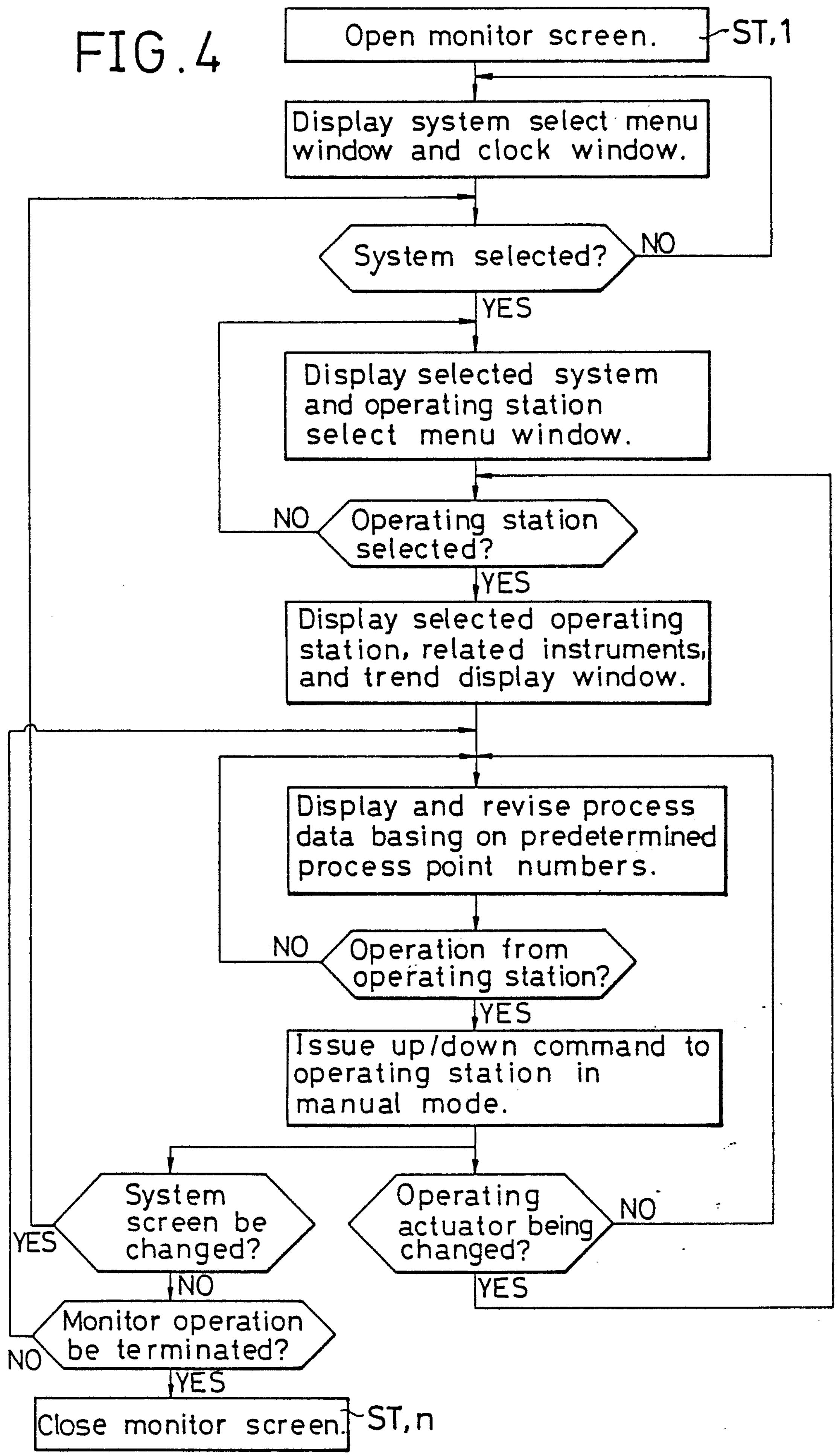
Open monitor screen.
ST,1
Display system select menu window and clock window.
System selected?
NO
YES
Display selected system and operating station select menu window.
Operating station selected?
NO
YES
Display selected operating station, related instruments, and trend display window.
Display and revise process data basing on predetermined process point numbers.
Operation from operating station?
NO
YES
Issue up/down command to operating station in manual mode.
System screen be changed?
YES
NO
Operating actuator being changed?
NO
YES
Monitor operation be terminated?
NO
YES
Close monitor screen.
ST,n

FIG. 5

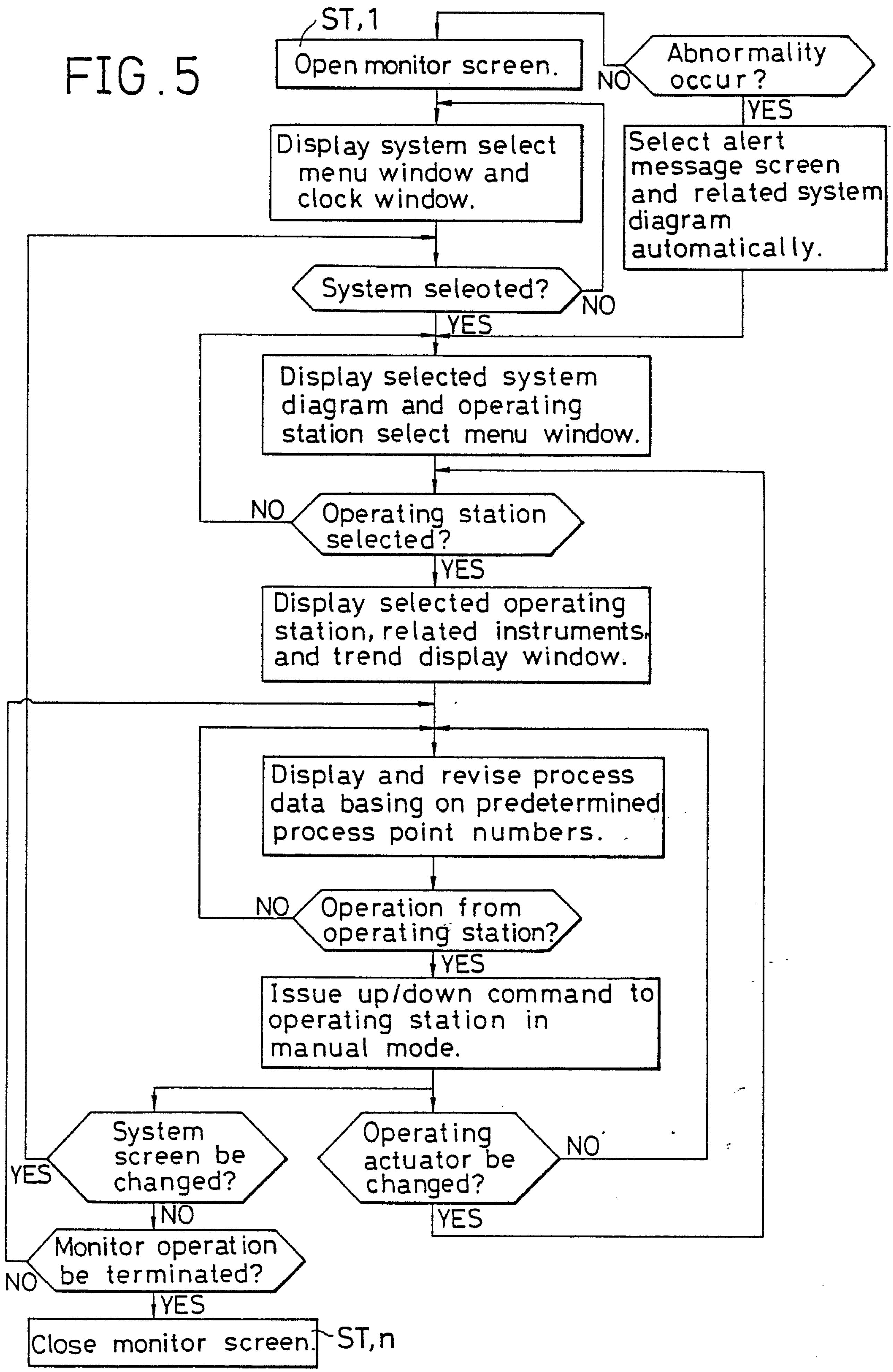
ST,1
Open monitor screen.
Abnormality occur?
NO
YES
Select alert message screen and related system diagram automatically.
Display system select menu window and clock window.
System seleoted?
NO
YES
Display selected system diagram and operating station select menu window.
NO
Operating station selected?
YES
Display selected operating station, related instruments, and trend display window.
Display and revise process data basing on predetermined process point numbers.
NO
Operation from operating station?
YES
Issue up/down command to operating station in manual mode.
System screen be changed?
YES
NO
Operating actuator be changed?
NO
YES
Monitor operation be terminated?
NO
YES
Close monitor screen.
ST,n

European Patent Office

# EUROPEAN SEARCH REPORT

Application number

EP 86 10 9250

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | IEEE TRANSACTIONS ON POWER APPARATUS AND SYSTEMS, vol. PAS-104, no. 6, June 1985, pages 1370-1376, IEEE, New York, US; R. FUJIWARA et al.: "User-friendly workstation for power systems analysis" * Whole document * --- | 1,2 | G 06 F 15/74<br>G 09 G 1/00 |
| A | CONTROL ENGINEERING, vol. 30, no. 6, June 1983, pages 63-66, St. Pontiac, Illinois, US; T.J. MILLER: "Ease of use, simplicity, flexibility are key requirements for process control graphics" * Page 63, left-hand column, line 1 - right-hand column, line 25; page 66, line 63 * ----- | 1-3 | |
| | | | TECHNICAL FIELDS SEARCHED (Int. Cl.4) |
| | | | G 06 F 15/74<br>G 09 G 1/00 |

The present search report has been drawn up for all claims

| Place of search | Date of completion of the search | Examiner |
|---|---|---|
| THE HAGUE | 05-03-1987 | BURGAUD C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82